# EUROPEAN PATENT SPECIFICATION

(11) **EP 2 255 429 B1**
(45) Date of publication and mention of the grant of the patent: **16.01.2013**
(21) Application number: 09723005.6
(22) Date of filing: 18.03.2009
(51) Int. Cl.: H02K 1/28

(54) **ARRANGEMENT AND PROCESS FOR MOUNTING AN AXIAL BEARING IN A HERMETIC COMPRESSOR**
ANORDNUNG UND VERFAHREN ZUR MONTAGE EINES AXIALLAGERS IN EINEM HERMETISCHEN VERDICHTER
AGENCEMENT ET PROCÉDÉ DE MONTAGE D UN PALIER AXIAL DANS UN COMPRESSEUR HERMÉTIQUE

(30) Priority: 19.03.2008 BR PI0801103
(43) Date of publication of application: 01.12.2010
(73) Proprietor: Whirlpool S.A., 04578-000 São Paulo - SP (BR)
(72) Inventor: PEREIRA, Milton Wetzel, 89218-015 Joinville - SC (BR); MOREIRA, Emerson, 89201-500-Joinville-SC (BR); FAGOTTI, Fabian, 89222-360 Joinville - SC (BR); WEBER, Gustavo Cardoso, 89204-041 Joinville - SC (BR); MACIEL, Ricardo Alexandre, 89227-014 Joinville - SC (BR)
(74) Representative: Geyer, Fehners & Partner
(86) International application number: PCT/BR2009/000074
(87) International publication number: WO 2009/114919

(56) References cited:
- WO-A-2007/061103
- DE-A1- 3 318 921
- US-A- 4 948 343
- US-A- 5 160 247
- US-A- 5 701 668
- US-A1- 2007 096 589

## Description

### Field of the Invention

The present invention refers to an arrangement and a process for mounting an axial bearing in a reciprocating hermetic compressor of the type which comprises: a cylinder block provided with a radial bearing and an upper axial bearing, an eccentric shaft, journalled in the radial bearing and having an upper extension projecting upwardly from the axial bearing; a rotor of an electric motor having a lower face portion and being mounted and rotatively axially locked around the upper end extension of the eccentric shaft, in order to have its lower face portion supported on the axial bearing. The invention further relates to a process for mounting an axial bearing in a reciprocating hermetic compressor of the type mentioned above.

### Background of the Invention

Hermetic refrigeration compressors of the type considered above, present, mounted inside a hermetically sealed shell, a cylinder block in which the eccentric shaft is radially journalled and which axially supports the electric motor rotor attached to the eccentric shaft, above the cylinder block.

The weight of the crankshaft-rotor assembly is supported by an axial bearing, which generally comprises an annular upper end surface of the cylinder block and at least one sliding ring, to be disposed between the upper end surface of the cylinder block and an annular portion of the lower end face of the electric motor rotor.

The crankshaft carries, in its lower end, a pump rotor which, during the operation of the compressor, conducts lubricant oil from a reservoir, defined in the lower portion of the shell, to the parts with mutual relative movement, so as to guarantee oil supply for the correct operation of said parts.

In order to prevent relative rotational movement between the lower end face of the rotor and the sliding ring of the axial bearing, the latter needs to be rotationally locked in relation to the crankshaft-rotor assembly.

In the currently known constructive solutions, the rotational locking of the sliding ring in relation to the crankshaft-rotor assembly is made by providing the sliding ring with one or more coplanar outer radial teeth that are dimensioned to be fitted in respective inner radial recesses provided close to the lower end face of the rotor, the depth of the radial recesses being dimensioned to guarantee the desired rotational locking of the sliding ring and to permit the outer face of the sliding ring, turned to the cylinder block, to be seated and supported thereon, avoiding the contact between the rotor and the cylinder block. This type of mounting is usually applied in axial bearings which use one or more sliding rings, cooperating or not with intermediary spheres, since the technical problem to be solved concerns the rotational locking of the sliding ring, which will be seated against the rotor, to the crankshaft-rotor assembly,

Although being largely used and providing an adequate axial bearing for the crankshaft-rotor assembly, this prior art construction presents the inconvenience of requiring the provision of the radial recesses in the rotor, in order to obtain the rotational locking of the adjacent sliding ring. The operations of machining the rotor or of stamping the end laminations of the lamination stack of the rotor with a specific configuration for obtaining said radial recesses raise the production costs.

Another drawback of the previous solution mentioned above results from the difficulty in maintaining the sliding ring positioned seated against the lower end face of the rotor during the mounting step in which the generally heated rotor is descendingly displaced to be fitted, by interference, around an upper extension of the eccentric shaft.

WO 2007/061103 A discloses a reciprocating hermetic compressor of the type mentioned at the beginning. This known compressor presents different bearing constructions, in which the bearing arrangement comprises a system using washers and rollers. In particular, fig. 10 and 11 illustrate a rotor bearing solution using a thrust ball bearing comprising balls arranged between an upper and lower washer seated respectively against a lower face of the rotor and an upper end face of the shaft. In this known compressor construction, no indexing means are provided to lock, against rotational displacement, the sliding ring in relation to the shaft. US-A-4 948 343 describes a slant-plate type compressor with a drive shaft rotatably supported in the compressor housing, and having one axial end terminating in a central bore. A rearward portion of the central bore is threaded, and an adjusting screw is screwed into that rearward portion to adjust the axial position of the drive shaft within the central bore. There is further disposed a spacer between the inner axial end surface of the drive shaft and the adjusting screw. This spacer includes a plurality of radial projections extending from a peripheral surface thereof and fitting into corresponding depressions formed in the interior surface of the central bore. By this way, the spacer prevents rotational motion of the drive shaft from being transferred to the adjusting screw. Therefore, the position of the adjusting screw and the drive shaft during rotational motion of the drive shaft is constantly maintained.

From US 2007/0096589 A1, there is known a rotor assembly for an electric machine which contains a straight shaft and a press fit ring. The straight shaft has a common diameter substantially throughout the whole axial length thereof. A section of the shaft adjacent to the slip rings contains linear knurls providing a series of raised edges along the circumference of the shaft. The ring is installed onto the shaft by guiding the shaft into a through-hole of the ring. The diameter of the ring through-hole is configured so that the ring will slide freely along the unknurled portions of the shaft, but will cause an interference fit, or a press fit, when portioned over the section of the shaft that contains the linear knurls. This known solution provides a rotational lock of the ring in relation to the shaft. The mounting positioning is maintained only by interference.

### Summary of the Invention

It is, therefore, an object of the present invention to provide an arrangement and a process for mounting an axial bearing in a reciprocating hermetic refrigeration compressor, of the type considered above and which allows a substantial constructive and assembling simplification of the parts for bearing the crankshaft-rotor assembly to the cylinder block and for the rotational locking of the sliding ring to said crankshaft-rotor assembly. According to the present invention there is provided an arrangement for mounting an axial bearing in a reciprocating hermetic compressor as mentioned at the beginning which is characterized in that said upper end extension of the eccentric shaft is provided with an indexing means and said sliding ring is carrying a positioning means to be coupled to the indexing means, so as to rotatively lock the sliding ring to the eccentric shaft, said indexing means being an indexing recess in the form of the indexing channel provided longitudinally and externally in the upper end extension of the eccentric shaft.

The construction described above allows using only one sliding ring provided with a single positioning means, such as a single coplanar inner radial tooth, which is fitted in an indexing means, for example, in the form of an indexing channel produced along a certain longitudinal upper end extension of the eccentric shaft. Thus, the sliding ring can be mounted to the eccentric shaft and gravitationally maintained in the mounting position, already rotatively locked to the latter, permitting the rotor to be subsequently mounted, by interference, around the upper end extension of the eccentric shaft, without requiring previous fixation of the sliding ring in the lower face portion of the rotor, as it occurs in the prior art described above.

Another advantageous aspect of the present solution is the possibility of using only one sliding ring, which us easily and rotatively locked to the eccentric shaft, without requiring the provision of multiple sliding rings, associated or not with intermediary spheres. Said sliding ring is usually made in metallic material and can be optionally injected in engineering plastic or also in additivated "Teflon", complying with the requirements of low friction and wear resistance at a lower cost. Further according to another aspect of the present invention, the mounting arrangement is carried out with a process for mounting an axial bearing in a reciprocating hermetic compressor of the type defined above, said process comprising the steps of: mounting the eccentric shaft in the interior of the radial bearing of the cylinder block and axially immobilizing it in a predetermined position, in which its upper end extension projects beyond the axial bearing; maintaining the cylinder block immobilized in a position in which the upper end extension of the eccentric shaft projects upwardly from the axial bearing; descendingly mounting the sliding ring around the upper end extension of the eccentric shaft, comprising coupling of positioning means thereof to indexing means being an indexing recess in the form of an indexing channel provided longitudinally and externally in the upper end extension of the eccentric shaft until reaching an axial positioning stop therein, in order to provide the rotational locking of the sliding ring to the eccentric shaft; and mounting and rotatively axially locking the rotor around the upper end extension of the eccentric shaft, with the lower face portion of said rotor seated on the sliding ring.

Advantageous embodiments of the invention are set forth in the dependent claims.

### Brief Description of the Drawings

The invention will be described below, with reference to the enclosed drawings, given by way of example of a possible embodiment of the invention and in which:
Figure 1 represents a partial median vertical sectional view of a reciprocating hermetic compressor mounted according to the prior art and illustrating, in an exploded way, the eccentric shaft supported on the cylinder block; the stator; the rotor; and the sliding ring;
Figure 1A represents an enlarged view of the region for mounting, to the eccentric shaft, the electric motor rotor disposed above the cylinder block, as illustrated in figure 1;
Figure 2 represents a cross-sectional view of the compressor mounted according to the prior art, taken according to line II-II indicated in figure 1A, in the region for seating the rotor to the cylinder block and incorporating a sliding ring mounted to the rotor and constructed according to the prior art;
Figures 3 and 3a represent, schematically and respectively, a lower perspective view and an upper perspective view of the eccentric shaft in an inverted position, carrying the positioning means of the present invention;
Figure 4 represents a partial median vertical sectional view of a reciprocating hermetic compressor, such as that of figure 1, for the construction of the present invention;
Figure 4A represents an enlarged view of the region for mounting, to the eccentric shaft, the electric motor rotor disposed above the cylinder block, as illustrated in figure 4; and
Figure 5 represents a cross-sectional view of the compressor mounted according to the present invention, taken according to line V-V indicated in figure 4A, in the region for seating the rotor to the cylinder block and incorporating a sliding ring mounted to the rotor and constructed according to the present invention.

### Detailed Description of the Invention

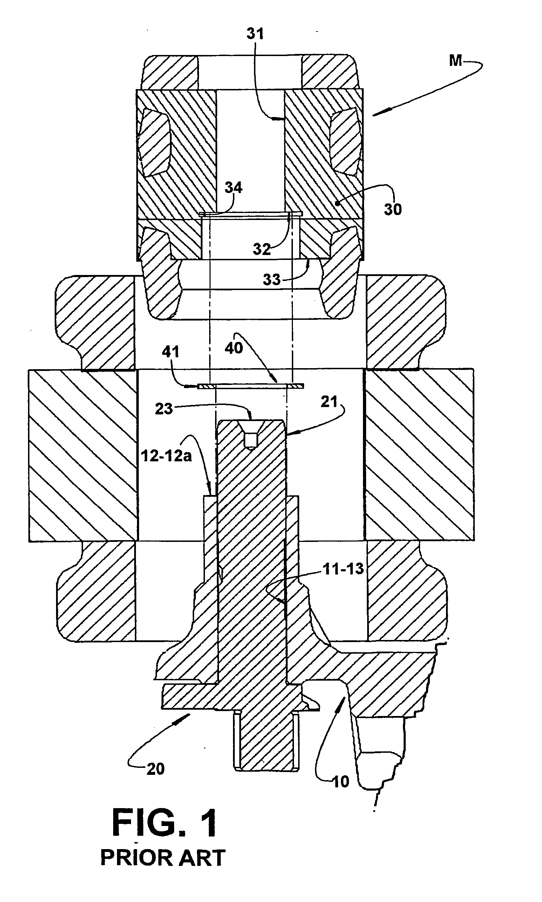

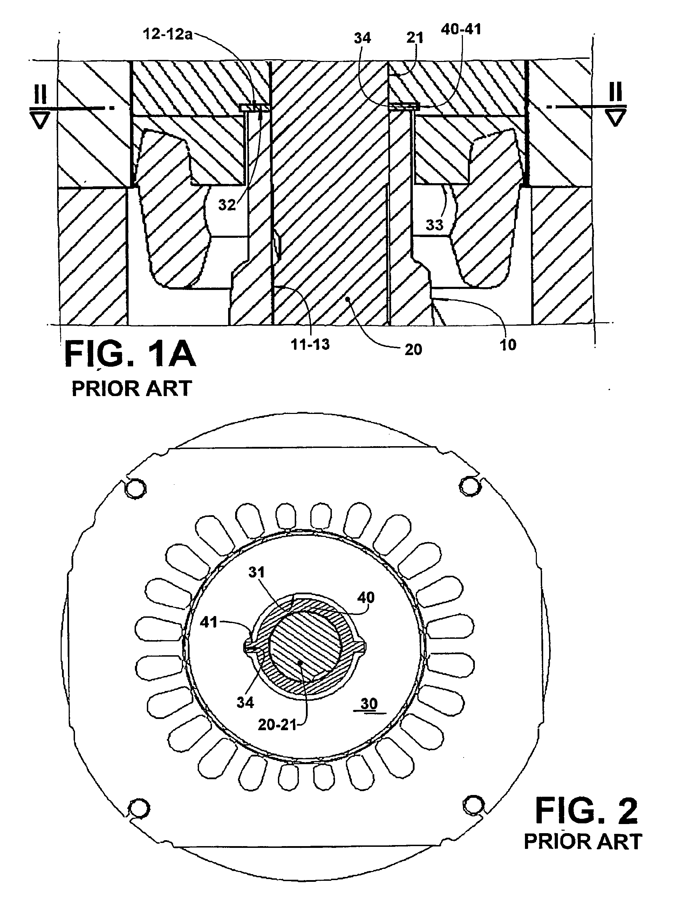

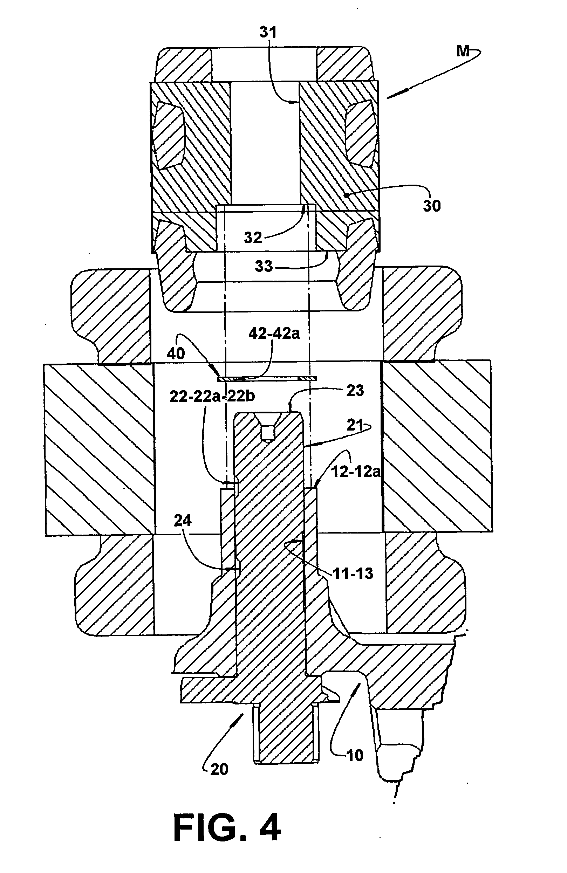

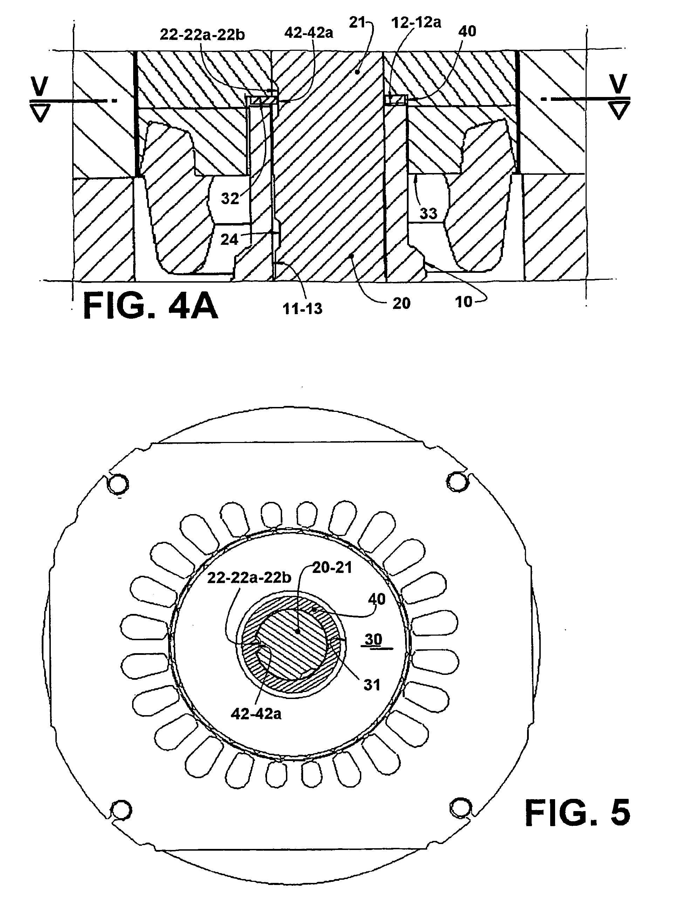

As already previously mentioned, the present invention is applied to a reciprocating hermetic compressor of the type illustrated in figures 1, 1A, 4 and 4A of the enclosed drawings and which comprises: a cylinder block 10 provided with a radial bearing 11 and an axial bearing 12 which, in the construction illustrated in the drawings, comprises an upper annular surface 12a of the cylinder block 10 itself; and a vertical eccentric shaft 20 journalled in the interior of the radial bearing 11 and having an upper end extension 21 projecting upwardly from the upper annular surface 12a of the cylinder block 10. In the constructive example illustrated in the enclosed drawings, the radial bearing 11 is defined in a cylindrical through-hole 13 of the cylinder block 10.

In the illustrated constructions, the eccentric shaft 20 attaches a rotor 30 of an electric motor M disposed above the cylinder block 10. The rotor 30 is formed from the vertical alignment of a plurality of annular metallic laminations which define together, and in their inner peripheral edges, an inner cylindrical surface 31 of the rotor 30, the latter also having an annular lower face portion 32 adjacent to the inner cylindrical surface 31 of the rotor 30.

The rotor 30 is mounted around the upper end extension 21 of the eccentric shaft 20, so as to have its lower face portion 32 supported on the axial bearing 12.

In the illustrated example, the lower face portion 32 of the rotor 30 is axially spaced back in relation to a lower end face 33 of the lamination stack of the rotor 30.

In the prior art construction, illustrated in figures 1, 1A and 2, for mounting the rotor 30 to the assembly defined by the cylinder block 10 and eccentric shaft 20, the rotor 30 is previously machined to provide, in its inner cylindrical surface 31, at least two radial slots 34, made from the lower face portion 32 defined in the lamination stack of the rotor 30 and in which are fitted and rotatively locked respective outer radial projections 41 of a sliding ring 40, which is axially seated against said lower face portion 32 and against the upper annular surface 12a of the cylinder block 10.

After the necessary and laborious retention of the sliding ring 40 to the rotor 30, the latter can be descendingly mounted and attached, generally by interference, in the upper end extension 21 of the eccentric shaft 20, without occurring loss of positioning of the sliding ring 40 in relation to the parts of eccentric shaft 20 and rotor 30. This construction presents the advantages already previously discussed.

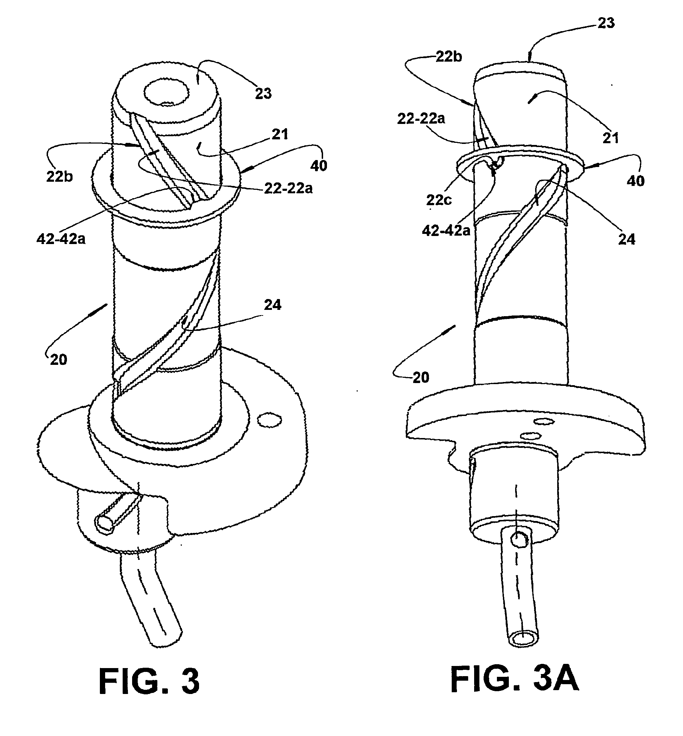

The present invention, as exemplarily illustrated in figures 3-5, provides an arrangement for mounting an axial bearing in a reciprocating hermetic compressor of the type described above, said arrangement comprising a sliding ring 40 mounted around the upper end extension 21 of the eccentric shaft 20, between the axial bearing 12 and the lower face portion 32 of the rotor 30, said upper end extension 21 of the eccentric shaft 20 being provided with an indexing means 22 and said sliding ring 40 carrying a positioning means 42 to be coupled to the indexing means 22, so as to rotatively lock the sliding ring 40 in the eccentric shaft 20.

In a way of carrying out the present invention, the indexing means 22 is defined by an indexing recess 22a and the positioning means 42 is in the form of an inner radial tooth 42a incorporated to the sliding ring 40. The sliding ring 40 can be constructed in a metallic material, injected in engineering plastic or also in additivated "Teflon", complying with the requirements of low friction and wear resistance at a lower cost.

In the illustrated construction, the inner radial tooth 42a of the sliding ring 40 is defined by a coplanar radial extension of the sliding ring 40.

In the illustrated construction, the indexing recess 22a is in the form of an indexing channel 22b, produced longitudinally and externally in the upper end extension 21 of the eccentric shaft 20, for example from a free upper end 23 of the eccentric shaft 20 and extending along the whole upper end extension 21 of the latter. For this construction, the indexing channel 22b defines, in a blind inner end, the axial positioning stop 22c of the sliding ring 40.

The indexing channel 22b of the present invention is preferably produced in helical development along the outer side surface of the upper end extension 21 of the eccentric shaft 20, particularly in a direction opposite to that of rotation of the eccentric shaft 20, so that, with said rotation, the lubricant oil existing in the region of the axial positioning stop 22c and, consequently, in the region in which the sliding ring 40 is mounted, is maintained in this region rather than being ascendingly impelled towards the free upper end 23 of the eccentric shaft 20, along said indexing channel 22b.

In the cases in which the eccentric shaft 20 presents one or more oil channels 24 produced in helical development in the outer side surface of said eccentric shaft 20, the indexing channel 22b is provided in helical development in a direction opposite to that of any helical oil channel 24 produced in said eccentric shaft 20.

It should be understood that the indexing means 22 can present constructions other than that illustrated in the enclosed drawings and which comprises the indexing channel 22b. For example, the indexing means 22 can be defined by a recess (not illustrated) produced in the eccentric shaft 20, in the axial positioning region of the sliding ring 40, the inner radial tooth 42a of the latter being fitted and rotatively locked in the interior of said recess after the sliding ring 40 has been axially descendingly displaced from the free upper end 23 of the eccentric shaft 20 until the mounting position, maintaining a certain localized elastic deformation of the assembly defined by the sliding ring 40 and inner radial tooth 42a, until the latter is fitted in said not-illustrated recess.

According to the present invention, the process for mounting the assembly defined by the rotor 30 and eccentric shaft 20 to the cylinder block 10 occurs with the generic steps of: mounting the eccentric shaft 20 in the interior of the radial bearing 11 of the cylinder block 10 and axially immobilizing it in a predetermined position, in which its upper end extension 21 projects beyond the axial bearing 12; maintaining the cylinder block 10 immobilized in a positioning in which the upper end extension 21 of the eccentric shaft 20 projects upwardly from the axial bearing 12; descendingly mounting the sliding ring 40 constructed according to the present invention, around the upper end extension 21 of the eccentric shaft 20, until reaching an axial positioning stop 22c therein, in order to provide the rotational locking of the sliding ring 40 to the eccentric shaft 20; and mounting and rotatively axially locking the rotor 30 around the upper end extension 21 of the eccentric shaft 20, until seating the lower face portion 32 of said rotor 30 on the sliding ring 40.

The step of mounting the sliding ring 40 comprises coupling the positioning means 42 of said sliding ring 40 to the indexing means 22 provided in the eccentric shaft 20, said coupling being obtained by positioning of the sliding ring 40 around the free upper end 23 of the eccentric shaft 20, which positioning is maintained until the sliding ring 40 reaches the axial positioning stop 22c. In this condition, the lower face portion 32 of the rotor 30 is seated against the sliding ring 40, which is slidingly seated against the axial bearing 12 of the cylinder block 10.

With this construction, besides obtaining a locking improvement, the oil is prevented from radially leaking through the region of the sliding ring 40, which oil leaking would impair the lubrication of the upper end extension 21 of the eccentric shaft 20.

The mounting arrangement of the present invention is related not only to the constructive modification in the sliding ring 40, as described above, but also to a determined construction and assembling of said sliding ring 40 to the eccentric shaft 20, which does not impair the correct operation of lubricating the latter.

The new constructive arrangement further allows an easier, quicker and safer mounting of the rotor 30 to the eccentric shaft 20, without requiring to provide housings for the sliding ring 40 in the rotor 30, and to attach said sliding ring 40 thereto, before placing the rotor 30 around the upper end extension 21 of the eccentric shaft 20, in order to prevent detachment of said sliding ring 40 in relation to the rotor 30, and also to permit a substantial reduction in the respective machining time. Although only one exemplary embodiment of the present invention has been illustrated herein, it should be understood that alterations can be made in the form and arrangements of the constitutive elements, without departing from the constructive concept defined in the claims accompanying the present specification.

## Claims

1. An arrangement for mounting an axial bearing in a reciprocating hermetic compressor, the arrangement comprising : a cylinder block (10) provided with a radial bearing (11) and an upper axial bearing (12); an eccentric shaft (20) journalled in the radial bearing (11) and having an upper end extension (21) projecting upwardly from the axial bearing (12); a rotor (30) of an electric motor (M) disposed above the cylinder block and having a lower face portion (32) and being mounted rotatively and axially locked around the upper end extension (21) of the eccentric shaft (20), in order to have its lower face portion (32) supported on the axial bearing (12), the arrangement comprising a sliding ring (40) mounted around the upper end extension (21) of the eccentric shaft (20), between the axial bearing (12) and the lower face portion (32) of the rotor (30), the arrangement being **characterized in that** said upper end extension (21) of the eccentric shaft (20) is provided with indexing means (22) and said sliding ring (40) carries positioning means (42) to be coupled to the indexing means (22), in order to rotatively lock the sliding ring (40) in the eccentric shaft (20), said eccentric shaft (20) indexing means (22) is an indexing recess (22a) in the form of an indexing channel (22b) provided longitudinally and externally in the upper end extension (21) of the eccentric shaft (20), and with an axial positioning stop (22c), said sliding ring (40) positioning means (42), is an inner radical tooth (42a), defined by a coplanar radical extension of the sliding ring (40).

2. The arrangement, as set forth in claim 1, **characterized in that** the positioning means (42) is in the form of an inner radial tooth (42a) incorporated to the sliding ring (40).

3. The arrangement, as set forth in claim 2, **characterized in that** the inner radial tooth (42a) of the sliding ring (40) is defined by a coplanar radial extension of the sliding ring (40).

4. The arrangement, as set forth in claim 1, **characterized in that** the indexing channel (22b) is provided from a free upper end (23) of the eccentric shaft (20) and extends along the whole upper end extension (21) of the latter.

5. The arrangement, as set forth in claim 1, **characterized in that** the indexing channel (22b) defines, in a blind inner end, an axial positioning stop (22c) of the sliding ring (40).

6. The arrangement, as set forth in claim 1, **characterized in that** the indexing channel (22b) is produced in helical development in the direction opposite to the operational rotation of the eccentric shaft (20).

7. The arrangement, as set forth in claim 6, in which the eccentric shaft (20) is externally provided with at least one helical oil channel (24), **characterized in that** the indexing channel (22b) is provided in helical development in the direction opposite to the helical development of the said oil channel (24).

8. The arrangement, as set forth in claim 1, **characterized in that** the lower face portion (32) of the rotor (30) is seated against the sliding ring (40), which is slidingly seated against the axial bearing (12) of the cylinder block (10).

9. A process for mounting an axial bearing in an arrangement of reciprocating hermetic compressor of the type defined in any of claims 1-7, **characterized in that** it comprises the steps of:
- mounting the eccentric shaft (20) in the interior of the radial bearing (11) of the cylinder block (10) and axially immobilizing it in a predetermined position, in which its upper end extension (21) projects beyond the axial bearing (12);
- maintaining the cylinder block (10) immobilized in a positioning in which the upper end extension (21) of the eccentric shaft (20) projects upwardly from the axial bearing (12);
- descendingly mounting the sliding ring (40) around the upper end extension (21) of the eccentric shaft (20), comprising coupling of positioning means (42) on said sliding ring (40), defined as an inner radial tooth (42a) defined by a coplanar radial extension of the sliding ring (40), to indexing means (22) on said eccentric shaft (20), defined as an indexing recess (22a) in the form of an indexing channel (22b) provided longitudinally and externally in the upper end extension (21) of the eccentric shaft (20) until reaching an axial positioning stop (22c) therein, in order to provide the rotational locking of the sliding ring (40) to the eccentric shaft (20) ; and
- mounting, rotatively and rotatively axially locking the rotor (30) above the cylinder block (10) and around the upper end extension (21) of the eccentric shaft (20), with the lower face portion (32) of said rotor (30) seated on the sliding ring (40).

10. The process, as set forth in claim 9, **characterized in that** the coupling between the positioning means (42) and the indexing means (22) is obtained by positioning the sliding ring (40) around a free upper end (23) of the eccentric shaft (20), which positioning is maintained until the sliding ring (40) reaches the axial positioning stop (22c).

## Patentansprüche

1. Anordnung zur Montage eines Axiallagers in einem hermetischen Kolbenverdichter, wobei die Anordnung folgendes aufweist: einen Zylinderblock (10), der mit einem Radiallager (11) und einem oberen Axiallager (12) versehen ist; einem exzentrischen Schaft (20), der in dem Radiallager (11) gelagert ist und einen oberen Endansatz (21) aufweist, der von dem Axiallager (12) nach oben hin vorspringt; einen Rotor (30) eines elektrischen Motors (M), der über dem Zylinderblock vorgesehen ist und einen unteren Flächenabschnitt (32) aufweist sowie um den oberen Endansatz (21) des exzentrischen Schaftes (20) verdrehbar montiert und axial arretiert ist, damit sein unterer Flächenabschnitt (32) auf dem Axiallager (12) abgestützt wird, wobei ferner die Anordnung einen Gleitring (40) umfaßt, der um den oberen Endansatz (21) des exzentrischen Schaftes (20) herum montiert ist, zwischen dem Axiallager (12) und dem unteren Flächenabschnitt (32) des Rotors (30), wobei die Anordnung **dadurch gekennzeichnet ist, daß** der obere Endansatz (21) des exzentrischen Schaftes (20) mit einer Einstelleinrichtung (22) versehen ist und der Gleitring (40) Stellmittel (42) zum Koppeln mit der Einstelleinrichtung (22) trägt, um den Gleitring (40) in dem exzentrischen Schaft (20) in Drehrichtung zu blockieren, wobei die Einstelleinrichtung (22) des exzentrischen Schaftes (20) eine Einstellvertiefung (22a) in Form eines Einstellkanals (22b) ist, der in Längsrichtung vorgesehen und auf der Außenseite in dem oberen Endansatz (21) des exzentrischen Schaftes (20) angebracht ist, und mit einem axialen Einstellstopp (22c), wobei die Stellmittel (42) des Gleitrings (40) aus einem inneren radialen Zahn (42a) bestehen, der von einem koplanaren radialem Abschnitt des Gleitrings (40) festgelegt ist.

2. Anordnung nach Anspruch 1, **dadurch gekennzeichnet, daß** die Stellmittel (42) in Form eines inneren radialen Zahnes (42a) ausgebildet sind, der an dem Gleitring (40) angebracht ist.

3. Anordnung nach Anspruch 2, **dadurch gekennzeichnet, daß** der innere radiale Zahn (42a) des Gleitrings (40) von einem koplanaren radialen Bereich des Gleitrings (40) ausgebildet ist.

4. Anordnung nach Anspruch 1, **dadurch gekennzeichnet, daß** der Einstellkanal (22b) von einem freien oberen Ende (23) des exzentrischen Schaftes (20) vorgesehen ist und längs des gesamten oberen Endansatzes (21) des letzteren verläuft.

5. Anordnung nach Anspruch 1, **dadurch gekennzeichnet, daß** der Einstellkanal (22b) an einem blinden inneren Ende einen axialen Einstellstopp (22c) des Gleitringes (4) festlegt.

6. Anordnung nach Anspruch 1, **dadurch gekennzeichnet, daß** der Einstellkanal (22b) in einer schraubenförmigen Abwicklung in Richtung entgegen der Arbeitsdrehung des exzentrischen Schaftes (20) ausgebildet ist.

7. Anordnung nach Anspruch 6, bei der der exzentrische Schaft (20) an seiner Außenseite mit wenigstens einem schraubenförmigen Ölkanal (24) versehen ist, **dadurch gekennzeichnet, daß** der Einstellkanal (22b) in einer schraubenförmigen Abwicklung in Richtung entgegen der schraubenförmigen Abwicklung des Ölkanals (24) ausgeführt ist.

8. Anordnung nach Anspruch 1, **dadurch gekennzeichnet, daß** der untere Flächenabschnitt (32) des Rotors (30) gegen den Gleitring (40) anliegt, der gleitend auf dem Axiallager (12) des Zylinderblocks (10) sitzt.

9. Verfahren zum Montieren eines Axiallagers in einer Anordnung eines hermetischen Kolbenverdichters, der Art, wie diese in einem der Ansprüche 1 bis 7 festgelegt ist, **dadurch gekennzeichnet, daß** es die folgenden Schritte umfaßt:
- Montieren des exzentrischen Schaftes (20) im Inneren des Radiallagers (11) des Zylinderblocks (10) und Festlegen desselben in Axialrichtung in einer vorher bestimmten Lage, in der sein oberer Endansatz (21) über das Axiallager (12) vorsteht;
- Unbewegliches Halten des Zylinderblocks (10) in einer Lage, in welcher der obere Endansatz (21) des exzentrischen Schaftes (20) nach oben von dem axialen Lager (12) vorsteht;
- Absenkendes Montieren des Gleitrings (40) um den oberen Endansatz (21) des exzentrischen Schaftes (20), einschließlich eines Verkoppelns der Stellmittel (42) an dem Gleitring (40), die als ein innerer radialer Zahn (42a) festgelegt sind, welcher seinerseits durch einen koplanaren radialen Abschnitt des Gleitrings (40) festgelegt ist, mit der Einstelleinrichtung (22) an dem exzentrischen Schaft (20), die als eine Einstellvertiefung (22a) in Form eines Einstellkanals (22b) festgelegt ist, der in Längsrichtung und auf der Außenseite in dem oberen Endansatz (21) des exzentrischen Schaftes (20) vorgesehen ist, bis zum Erreichen eines axialen Einstellstopps (22c) darin, um das Blockieren des Gleitrings (40) in Drehrichtung am exzentrischen Schaft (20) vorzusehen, und
- Verdrehbares Montieren und in Axialrichtung Arretieren des Rotors (30) oberhalb des Zylinderblocks (10) und um den oberen Endansatz (21) des exzentrischen Schaftes (20), wobei der untere Flächenabschnitt (32) des Rotors (30) auf dem Gleitring (40) aufsitzt.

10. Verfahren nach Anspruch 9, **dadurch gekennzeichnet, daß** das Koppeln zwischen den Stellmitteln (42) und der Einstelleinrichtung (22) durch Positionieren des Gleitrings (40) um ein freies oberes Ende (23) des exzentrischen Schaftes (20) herum erhalten wird, wobei dieses Positionieren beibehalten wird, bis der Gleitring (40) den axialen Einstellstopp (22c) erreicht.

## Revendications

1. Aménagement pour monter un palier axial dans un compresseur hermétique alternatif, l'aménagement comprenant un bloc cylindre (10) pourvu d'un palier radial (11) et d'un palier axial supérieur (12) ; un arbre excentrique (20) tourillonné dans le palier radial (11) et ayant une extension d'extrémité supérieure (21) faisant saillie vers le haut depuis le palier axial (12) ; un rotor (30) d'un moteur électrique (M) disposé au-dessus du bloc cylindre, ayant une portion de face inférieure (32) et étant monté à rotation et bloqué axialement autour de l'extension d'extrémité supérieure (21) de l'arbre excentrique (20), de manière que sa portion de face inférieure (32) soit supportée sur le palier axial (12), l'aménagement comprenant une bague coulissante (40) montée autour de l'extension d'extrémité supérieure (21) de l'arbre excentrique (20), entre le palier axial (12) et la portion de face inférieure (32) du rotor (30), l'aménagement étant **caractérisé en ce que** ladite extension d'extrémité supérieure (21) de l'arbre excentrique (20) est pourvue d'un moyen de mise à point (22) et ladite bague coulissante (20) porte un moyen de positionnement (42) accouplé au moyen de mise à point (22) afin de bloquer en rotation la bague coulissante (40) dans l'arbre excentrique (20), ledit moyen de mise à point (22) de l'arbre excentrique (20) est un évidement de mise à point (22a) sous la forme d'un canal de mise à point (22b) ménagé longitudinalement et extérieurement dans l'extension d'extrémité supérieure (21) de l'arbre excentrique (20), et avec un arrêt de positionnement axial (22c), ledit moyen de positionnement (42) de la bague coulissante (40) est une dent radiale interne (42a) définie par une extension radiale coplanaire de la bague coulissante (40).

2. Aménagement selon la revendication 1, **caractérisé en ce que** le moyen de positionnement (42) se présente sous la forme d'une dent radiale interne (42a) incorporée à la bague coulissante (40).

3. Aménagement selon la revendication 2, **caractérisé en ce que** la dent radiale interne (42a) de la bague coulissante (40) est définie par une extension radiale coplanaire de la bague coulissante (40).

4. Aménagement selon la revendication 1, **caractérisé en ce que** le canal de mise à point (22b) est ménagé depuis une extrémité supérieure libre (23) de l'arbre excentrique (20) et s'étend le long de la totalité de l'extension d'extrémité supérieure (21) de celui-ci.

5. Aménagement selon la revendication 1, **caractérisé en ce que** le canal de mise à point (22b) définit, à une extrémité interne aveugle, un arrêt de positionnement axial (22c) de la bague coulissante (40).

6. Aménagement selon la revendication 1, **caractérisé en ce que** le canal de mise à point (22b) est produit en développement hélicoïdal dans le sens opposé à la rotation opérationnelle de l'arbre excentrique (20).

7. Aménagement selon la revendication 6, dans lequel l'arbre excentrique (20) est pourvu extérieurement d'au moins un canal d'huile hélicoïdal (24), **caractérisé en ce que** le canal de mise à point (22b) est ménagé en développement hélicoïdal dans le sens opposé au développement hélicoïdal dudit canal d'huile (24).

8. Aménagement selon la revendication 1, **caractérisé en ce que** la portion de face inférieure (32) du rotor (30) est logée contre la bague coulissante (40), qui est logée à coulissement contre le palier axial (12) du bloc cylindre (10).

9. Procédé de montage d'un palier axial dans un aménagement d'un compresseur alternatif hermétique du type défini dans l'une quelconque des revendications 1 à 7, **caractérisé en ce qu'**il comprend les étapes consistant à :
- monter l'arbre excentrique (20) à l'intérieur du palier radial (11) du bloc cylindre (10) et l'immobiliser axialement dans une position prédéterminée, dans laquelle son extension d'extrémité supérieure (21) fait saillie au-delà du palier axial (12) ;
- maintenir le bloc cylindre (10) immobilisé dans un positionnement dans lequel l'extension d'extrémité supérieure (21) de l'arbre excentrique (20) fait saillie vers le haut depuis le palier axial (12) ;
- monter en mode descendant la bague coulissante (40) autour de l'extension d'extrémité supérieure (21) de l'arbre excentrique (20), comprenant le couplage de moyens de positionnement (42) sur ladite bague coulissante (40), définie comme une dent radiale interne (42a), définie par une extension radiale coplanaire de la bague coulissante (40), à des moyens de mise à point (22) sur ledit arbre excentrique (20), défini comme une cavité de mise à point (22a) sous la forme d'un canal de mise à point (22b) ménagé longitudinalement et extérieurement dans l'extension d'extrémité supérieure (21) de l'arbre excentrique (20) jusqu'à atteindre un arrêt de positionnement axial (22c) dans celui-ci, afin d'assurer le blocage en rotation de la bague coulissante (40) à l'arbre excentrique (20) ; et
- monter à rotation et bloquer axialement le rotor (30) au-dessus du bloc cylindre (10) et autour de l'extension d'extrémité supérieure (21) de l'arbre excentrique (20), la portion de face inférieure (32) dudit rotor (30) étant logée sur la bague coulissante (40).

10. Procédé selon la revendication 9, **caractérisé en ce que** l'accouplement entre le moyen de positionnement (42) et le moyen de mise à point (22) est obtenu en positionnant la bague coulissante (40) autour d'une extrémité supérieure libre (23) de l'arbre excentrique (20), lequel positionnement est maintenu jusqu'à ce que la bague coulissante (40) atteigne l'arrêt de positionnement axial (22c).
